(19) Europäisches Patentamt
European Patent Office
Office européen des brevets

(11) Veröffentlichungsnummer: **0 315 045 B1**

# (12) EUROPÄISCHE PATENTSCHRIFT

(45) Veröffentlichungstag der Patentschrift: **04.03.92**

(51) Int. Cl.[5]: **C09B 62/04**, D06P 1/382

(21) Anmeldenummer: **88117888.3**

(22) Anmeldetag: **27.10.88**

## (54) Verdoppelte Kupfer-Formazanreaktivfarbstoffe.

(30) Priorität: **05.11.87 DE 3737537**

(43) Veröffentlichungstag der Anmeldung:
**10.05.89 Patentblatt 89/19**

(45) Bekanntmachung des Hinweises auf die Patenterteilung:
**04.03.92 Patentblatt 92/10**

(84) Benannte Vertragsstaaten:
**CH DE FR GB IT LI**

(56) Entgegenhaltungen:
**DE-A- 3 434 818**
**FR-A- 2 270 304**
**GB-A- 1 163 840**

(73) Patentinhaber: **BASF Aktiengesellschaft**
**Carl-Bosch-Strasse 38**
**W-6700 Ludwigshafen(DE)**

(72) Erfinder: **Pandl, Klaus, Dr.**
**Schumannstrasse 18**
**W-6700 Ludwigshafen(DE)**
Erfinder: **Patsch, Manfred, Dr.**
**Fritz-Wendel-Strasse 4**
**W-6706 Wachenheim(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Die vorliegende Erfindung betrifft neue verdoppelte Reaktivfarbstoffe, deren Chromophor sich von einem Kupfer-Formazanfarbstoff ableitet und die reaktive Gruppe ein Monofluor- oder ein Monochlortriazinanker ist, sowie ihre Verwendung zum Färben und Bedrucken von Hydroxygruppen oder Stickstoff enthaltenden organischen Substraten.

Aus der DE-A-3 434 818 sind bereits verdoppelte Kupfer-Formazanreaktivfarbstoffe bekannt, die einen Monochlortriazinrest als Reaktivankersystem aufweisen. Es hat sich jedoch gezeigt, daß die dort beschriebenen Farbstoffe ungenügende anwendungstechnische Eigenschaften, z.B. unzureichende Löslichkeit im Färbebad, geringe Farbstärke sowie ungenügendes Farbaufbauvermögen bei Anwendung in Färbeverfahren für mittlere oder teife Farbstärken besitzen.

Aufgabe der vorliegenden Erfindung war es nun, neue Kupfer-Formazanreaktivfarbstoffe bereitzustellen, die die genannten Mängel nicht mehr aufweisen.

Es wurden neue verdoppelte Kupfer-Formazanreaktivfarbstoffe der Formel I

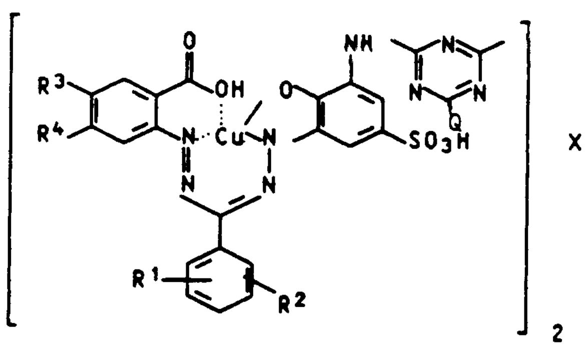

(I)

sowie deren Salze gefunden, wobei
$R^1$ Wasserstoff, Hydroxysulfonyl oder Chlor,
$R^2$ Wasserstoff oder Hydroxysulfonyl,
einer der Rest $R^3$ und $R^4$ Wasserstoff und der andere Hydroxysulfonyl,
Q Fluor oder Chlor und
X einen Rest der Formel

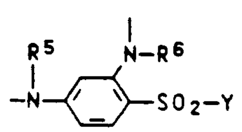

oder

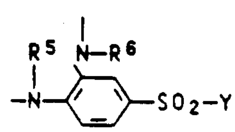

bedeuten, in der $R^5$ und $R^6$ gleich oder verschieden sind und unabhängig voneinander jeweils für Wasserstoff oder gegebenenfalls durch Cyano oder Hydroxy substituiertes $C_1$-$C_4$-Alkyl und Y für Hydroxy oder den Rest $NR^7R^8$ stehen, in dem $R^7$ und $R^8$ gleich oder verschieden sind und unabhängig voneinander jeweils die Bedeutung von Wasserstoff oder von gegebenenfalls durch Cyano, Hydroxy oder Hydroxysulfonyl substituiertem $C_1$-$C_4$-Alkyl besitzen, mit der Maßgabe, daß $R^5$ und $R^6$ nicht gleichzeitig Wasserstoff bedeuten.

Reste $R^5$, $R^6$, $R^7$ und $R^8$ in Formel I sind beispielsweise Methyl, Ethyl, Propyl, Isopropyl, Butyl, Isobutyl, sec-Butyl, 2-Cyanoethyl, 2- oder 3-Cyanopropyl, 1- oder 2-Cyanoprop-2-yl, 2- oder 4-Cyanobutyl, 2-Hydroxyethyl, 2- oder 3-Hydroxypropyl oder 2- oder 4-Hydroxybutyl.

Reste $R^7$ und $R^8$ sind weiterhin z.B. 2-Hydroxysulfonylethyl, 2- oder 3-Hydroxysulfonylpropyl oder 2- oder 4-Hydroxysulfonylbutyl.

Der Rest Y steht beispielsweise für Hydroxy, Amino, Mono- oder Dimethylamino, Mono- oder Diethylamino, Mono- oder Dipropylamino, Mono- oder Diisopropylamino, Mono- oder Dibutylamino, N-Methyl-N-ethylamino, Mono- oder Bis(2-cyanoethyl)amino, Mono- oder Bis(2-hydroxyethyl)amino, N-Ethyl-N-(2-cyanoethyl)amino N-Ethyl-N-2-hydroxyethylamino, 2-Hydroxysulfonylethylamino oder N-Ethyl-N-(2-hydroxysulfonylethyl)amino.

Als Salze der Kupfer-Formazanreaktivfarbstoffe der Formel I kommen Metall- oder Ammoniumsalze in Betracht. Metallsalze sind insbesondere die Lithium-, Natrium- oder Kaliumsalze. Unter Ammoniumsalzen im erfindungsgemäßen Sinne sind solche Salze zu verstehen, die entweder unsubstituierte oder substituierte Ammoniumkationen aufweisen. Substituierte Ammoniumkationen sind z.B. Monoalkyl-, Dialkyl-, Trialkyl, -Tetraalkyl oder Benzyltrialkylammoniumkationen oder solche Kationen, die sich von stickstoffhaltigen fünf- oder sechsgliedrigen gesättigten Heterocyclen ableiten, wie Pyrrolidinium-, Piperidinium-, Morpholinium-, Piperazinium- oder N-Alkylpiperaziniumkationen oder deren N-monoalkyl- oder N,N-dialkylsubstituierte Produkte. Unter Alkyl ist dabei in diesem Zusammenhang im allgemeinen geradkettiges oder verzweigtes $C_1$-$C_{20}$-Alkyl zu verstehen, das durch Hydroxylgruppen substituiert und/oder durch Sauerstoffatome unterbrochen sein kann.

Bevorzugt sind verdoppelte Kupfer-Formazanreaktivfarbstoffe der Formel I, in der $R^1$ und $R^2$ jeweils Wasserstoff und X einen Rest der Formel

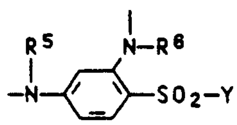 oder 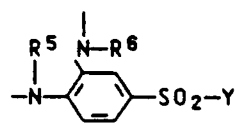

bedeuten, wobei $R^5$ und $R^6$ jeweils gleich oder verschieden sind und unabhängig voneinander für Wasserstoff, Methyl oder Ethyl stehen und Y die obengenannte Bedeutung besitzt.

Bevorzugt sind weiterhin solche verdoppelten Kupfer-Formzanreaktivfarbstoffe der Formel I, in der Q für Chlor steht.

Besonders bevorzugt sind verdoppelte Kupfer-Formazanreaktivfarbstoffe der Formel I, in der $R^1$ und $R^2$ jeweils Wasserstoff und X einen Rest der Formel

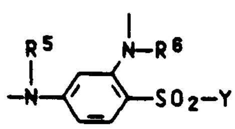

bedeuten, wobei $R^5$ und $R^6$ unabhängig voneinander für Wasserstoff, Methyl oder Ethyl und Y für Hydroxy stehen.

Ganz besonders hervorzuheben sind verdoppelte Kupfer-Formazanreaktivfarbstoffe der Formel I, in der $R^1$ und $R^2$ jeweils Wasserstoff und X einen Rest der Formel

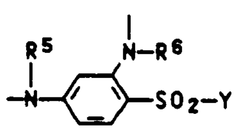

bedeutet, wobei $R^5$ für Wasserstoff, $R^6$ für Methyl oder Ethyl und Y für Hydroxy stehen.

Die neuen verdoppelten Kupfer-Formazanreaktivfarbstoffe der Formel I können nach an sich bekannten Methoden hergestellt werden. Beispielsweise erhält man sie durch Umsetzung von Cyanurfluorid oder Cyanurchlorid mit einem Kupfer-Formazanfarbstoff der Formel II

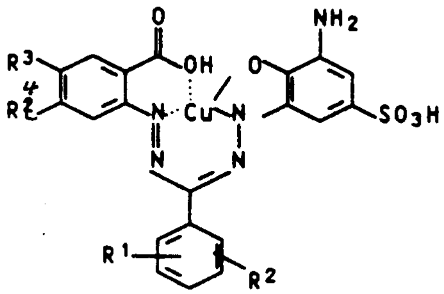

(II),

in der $R^1$, $R^2$, $R^3$ und $R^4$ jeweils die obengenannte Bedeutung besitzen, wobei ein Farbstoff der Formel III

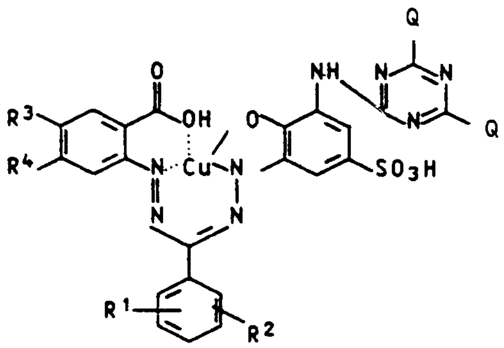

(III),

in der Q, $R^1$, $R^2$, und $R^4$ jeweils die obengenannte Bedeutung besitzen, entsteht, der dann durch Weiterreaktion mit einem Diamin der Formel IV

H-X-H (IV)

in der X die obengenannte Bedeutung besitzt, in den erfindungsgemäßen Farbstoff der Formel I übergeführt wird.

Der Kupfer-Formazanfarbstoff der Formel II kann ebenfalls nach an sich bekannten Methoden hergestellt werden. Beispielsweise erhält man ihn, wenn man das Diazoniumsalz von 1-Hydroxy-2-amino-6-acetylaminobenzol-4-sulfonsäure mit einem Phenylhydrazon der Formel V

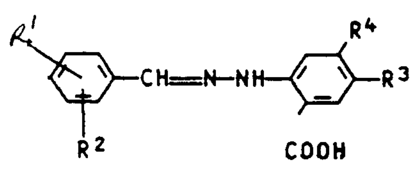

(V),

in der $R^1$, $R^2$, $R^3$ und $R^4$ jeweils die obengenannte Bedeutung besitzen, kuppelt, anschließend aus dem Reaktionsprodukt den Kupfer-Komplex durch Umsetzung mit Kupfersulfat oder Kupferchlorid herstellt und schließlich durch Hydrolyse die Acetylaminogruppe in die freie Aminogruppe überführt (vgl. Houben-Weyl, Methoden der Organischen Chemie, Band 10/2, Seiten 487 und 488, 1967).

Weitere Angaben zur Herstellung können den Beispielen entnommen werden.

Die neuen verdoppelten Kupfer-Formazan-Reaktivfarbstoffe der Formel I eignen sich sum Färben und Bedrucken von Hydroxygruppen oder Stickstoff enthaltenden organischen Substraten. Solche Substrate sind beispielsweise Leder oder Fasermaterial, das überwiegend natürliche oder synthetische Polyamide oder natürliche oder regenerierte Cellulose enthält. Vorzugsweise eignen sich die neuen Farbstoffe zum Färben und Bedrucken von Textilmaterial auf der Basis von Baumwolle. Besonders vorteilhaft werden sie dabei nach dem Ausziehverfahren gefärbt.

Die erfindungsgemäßen Farbstoffe ergeben Ausfärbungen in mittelblauen Tönen. Sie weisen eine gute

Löslichkeit auf und besitzen ein sehr hoch liegendes Echtheitsniveau, insbesondere eine hohe Naßechtheit. Das Farbaufbauvermögen bei mittleren bis tiefen Färbungen ist besonders hoch.

Die folgenden Beispiele sollen die Erfindung näher erläutern.

Beispiel 1

Zu einer Lösung von 124 g des Natriumsalzes der Verbindung der Formel

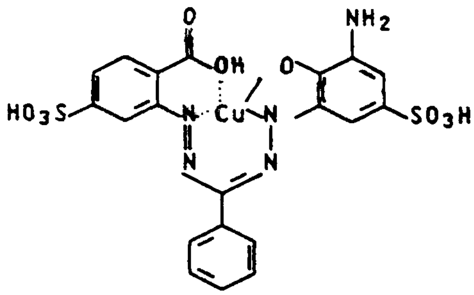

in 300 ml Wasser und 300 g Eis wurden 39 g Cyanurchlorid gegeben. Der pH-Wert des Reaktionsgemischs wurde bis zum Ende der Acylierung durch Zugabe von Natriumhydrogencarbonat bei 5 bis 5,5 gehalten. Nach 2 Stunden wurden 19 g 4-Amino-2-(N-methylamino)benzolsulfonsäure, gelöst in 200 ml Wasser, eingetragen. Die Suspension wurde auf 60° C erwärmt und der pH-Wert durch Zusatz von Natriumhydrogencarbonat bei 7 bis 8 gehalten. Nach 3 Stunden wurde der gebildete Farbstoff der Formel

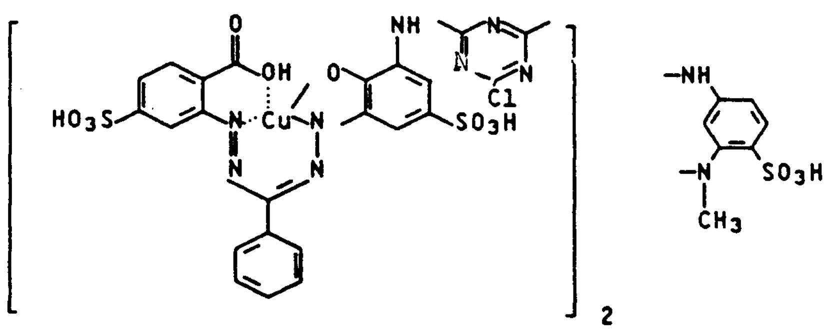

mit Natriumchlorid in Form seines Natriumsalzes ausgesalzen, abfiltriert und getrocknet. Das erhaltene dunkelblaue Farbstoffpulver ist sehr gut wasserlöslich und färbt Baumwolle in klaren blauen Tönen. Die Färbungen sind licht- und naßecht. Sie weisen eine bemerkenswerte Stabilität gegenüber oxidativen Einflüssen auf.

Beispiel 2

Zu einer Lösung von 124 g des Natriumsalzes der Verbindung der Formel

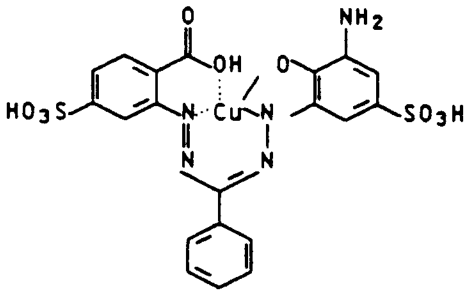

in 300 ml Wasser und 300 g Eis wurden 39 g Cyanurchlorid gegeben. Der pH-Wert des Reaktionsgemischs wurde bis zum Ende der Acylierung durch Zugabe von Natriumhydrogencarbonat bei 5 bis 5,5 gehalten. Die so erhaltene Suspension wurde in eine Lösung aus 19 g 3-Amino-4-(N-methylamino)benzolsulfonsäure in 200 ml Wasser, die zuvor auf 60 ° C erwärmt worden war, gegeben. Man hielt diese Temperatur und hielt den pH-Wert des Reaktionsgemischs durch Zusatz von Natriumhydrogencarbonat bei 7 bis 8. Nach 5 Stunden wurde der gebildete Farbstoff der Formel

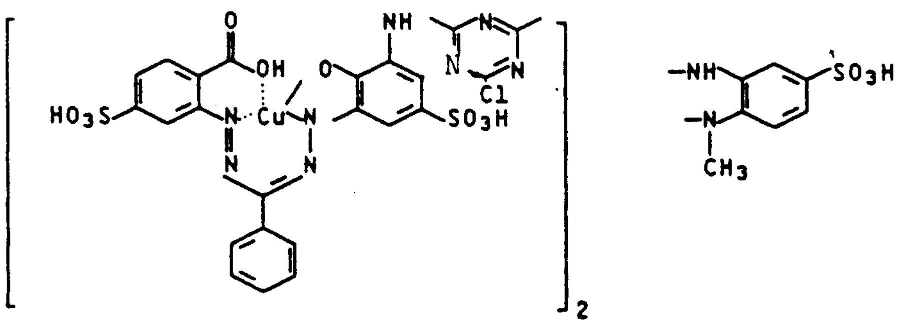

mit einer Mischung von Natrium- und Kaliumchlorid in Form seines Natriumsalzes ausgesalzen, abfiltriert und getrocknet. Das erhaltene dunkelblaue Farbstoffpulver ist ausgezeichnet wasserlöslich und färbt Baumwolle in klaren blauen Tönen. Die Färbungen sind licht- und naßecht. Sie weisen eine bemerkenswerte Stabilität gegenüber oxidativen Einflüssen auf.

Beispiel 3

Zu einer Lösung von 124 g des Natriumsalzes der Verbindung der Formel

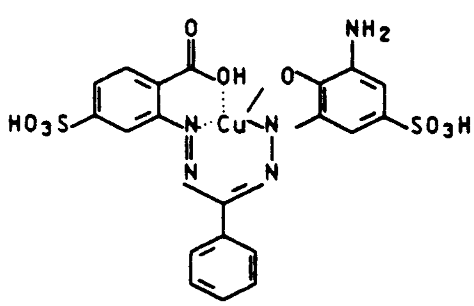

in 1200 ml Wasser wurden bei 0 ° C 32 g Trifluortriazin gegeben. Der pH-Wert des Reaktionsgemisches wurde bis zur Ende der Acylierung durch Zugabe von Natronlauge zwischen 4,9 und 5,2 gehalten. Nach 20 Minuten wurden bei 15 ° C 19 g 4-Amino-2-(N-methyl amino)benzolsulfonsäure, gelöst in 200 ml Wasser, eingetragen. Der pH-Wert des Reaktionsgemisches wurde mit Natronlauge bei 7 gehalten. Die Temperatur wurde auf 20 ° C erhöht und nach 3 Stunden wurde der gebildete Farbstoff der Formel

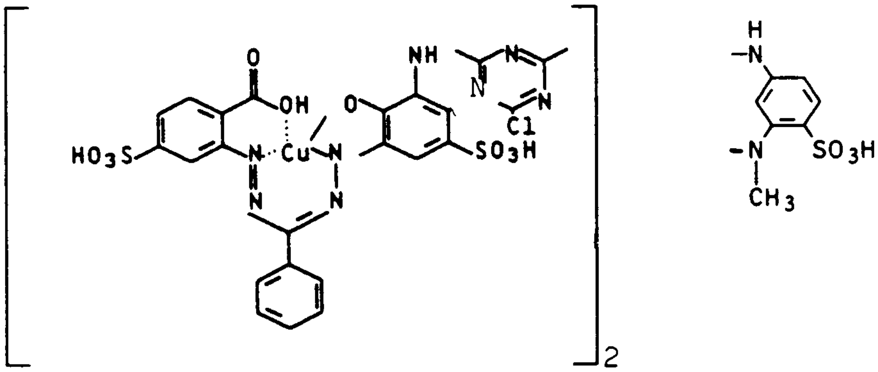

mit Natriumchlorid in Form seines Natriumsalzes ausgesalzen, abfiltriert und getrocknet. Das erhaltene dunkelblaue Farbstoffpulver ist sehr gut wasserlöslich und färbt Baumwolle in klaren blauen Tönen. Die Färbungen sind licht- und naßecht. Sie weisen eine bemerkenswerte Stabilität gegenüber oxidativen Einflüssen auf.

In analoger Weise werden die in der folgenden Tabelle aufgeführten Farbstoffe der Formel

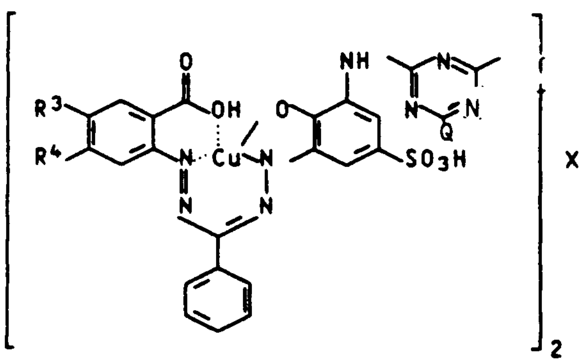

erhalten (als Natriumsalz). Bei Anwendung der üblichen Ausziehmethode färben sie Cellulosefasern in blauen Tönen. Die Farbstoffe besitzen eine sehr gute Löslichkeit in Wasser, sind licht- und naßecht und zeigen gute Stabilität gegenüber oxidativen Einflüssen.

| Beisp. Nr. | X | $R^3$ | $R^4$ | Q |
|---|---|---|---|---|
| 4 | 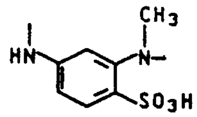 | $SO_3H$ | H | Cl |
| 5 | 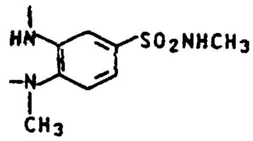 | $SO_3H$ | H | Cl |
| 6 | 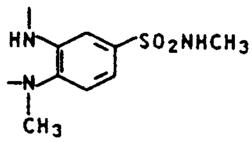 | H | $SO_3H$ | Cl |
| 7 | 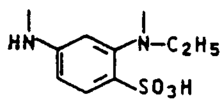 | $SO_3H$ | H | Cl |
| 8 | 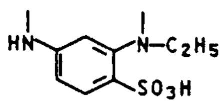 | H | $SO_3H$ | Cl |
| 9 | 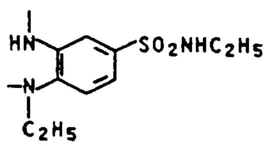 | $SO_3H$ | H | Cl |
| 10 | 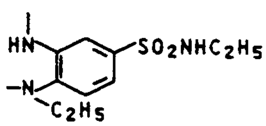 | H | $SO_3H$ | Cl |
| 11 | 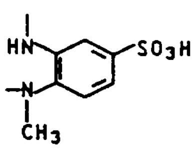 | $SO_3H$ | H | Cl |
| 12 | 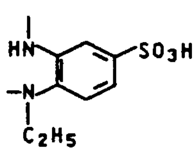 | $SO_3H$ | H | Cl |
| 13 | 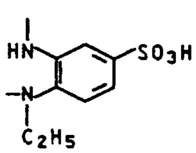 | H | $SO_3H$ | Cl |

| Beisp. Nr. | X | $R^3$ | $R^4$ | Q |
|---|---|---|---|---|
| 14 | 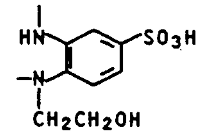 | $SO_3H$ | H | Cl |
| 15 | 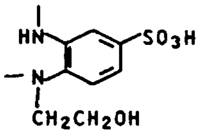 | H | $SO_3H$ | Cl |
| 16 | 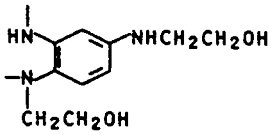 | $SO_3H$ | H | Cl |
| 17 | 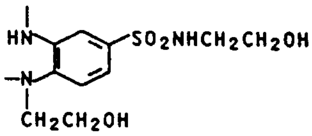 | H | $SO_3H$ | Cl |
| 18 | 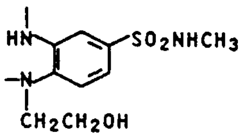 | $SO_3H$ | H | Cl |
| 19 | 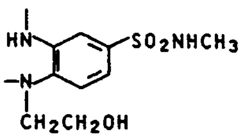 | H | $SO_3H$ | Cl |
| 20 | 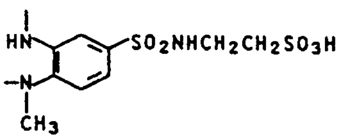 | $SO_3H$ | H | Cl |
| 21 | 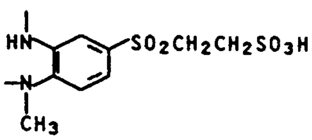 | H | $SO_3H$ | Cl |
| 22 | 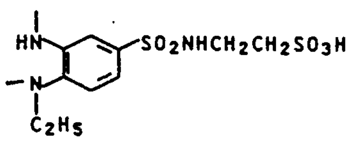 | $SO_3H$ | H | Cl |
| 23 | 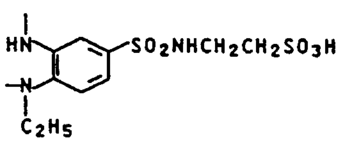 | H | $SO_3H$ | Cl |

| Beisp. Nr. | X | $R^3$ | $R^4$ | Q |
|---|---|---|---|---|
| 24 | 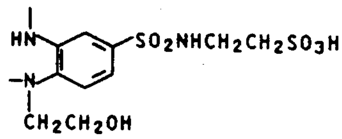 | $SO_3H$ | H | Cl |
| 25 | 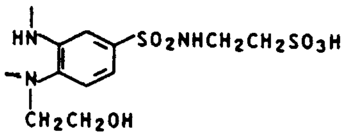 | H | $SO_3H$ | Cl |
| 26 | 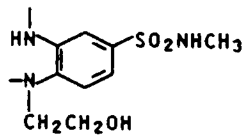 | $SO_3H$ | H | Cl |
| 27 | 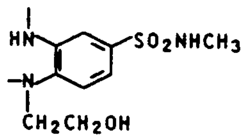 | H | $SO_3H$ | Cl |
| 28 | 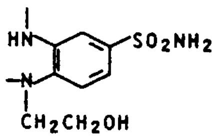 | $SO_3H$ | H | Cl |
| 29 | 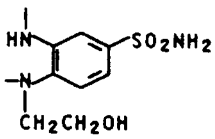 | H | $SO_3H$ | Cl |

| Beisp. Nr. | X | $R^3$ | $R^4$ | Q |
|---|---|---|---|---|
| 30 | 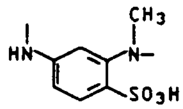 | $SO_3H$ | H | F |
| 31 | 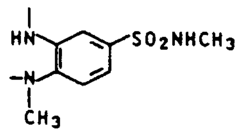 | $SO_3H$ | H | F |
| 32 | 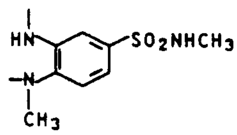 | H | $SO_3H$ | F |
| 33 | 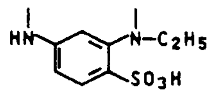 | $SO_3H$ | H | F |
| 34 | 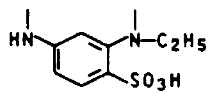 | H | $SO_3H$ | F |
| 35 | 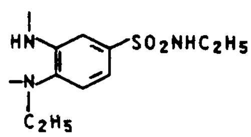 | $SO_3H$ | H | F |
| 36 | 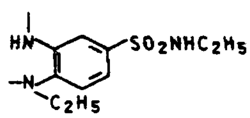 | H | $SO_3H$ | F |
| 37 | 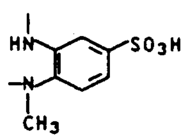 | $SO_3H$ | H | F |
| 38 | 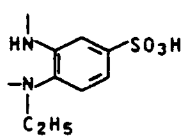 | $SO_3H$ | H | F |
| 39 | 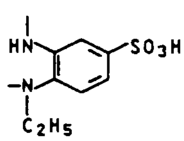 | H | $SO_3H$ | F |
| 40 | 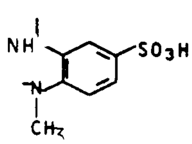 | H | $SO_3H$ | F |

| Beisp. Nr. | X | $R^3$ | $R^4$ | Q |
|---|---|---|---|---|
| 41 | 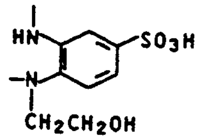 | $SO_3H$ | H | F |
| 42 | 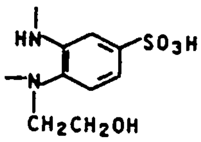 | H | $SO_3H$ | F |
| 43 | 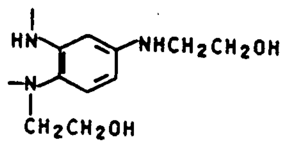 | $SO_3H$ | H | F |
| 44 | 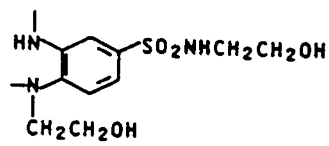 | H | $SO_3H$ | F |
| 45 | 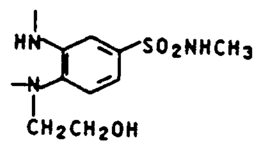 | $SO_3H$ | H | F |
| 46 | 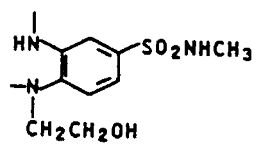 | H | $SO_3H$ | F |
| 47 | 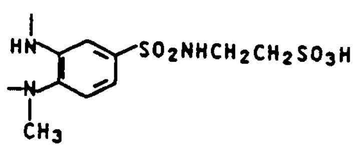 | $SO_3H$ | H | F |
| 48 | 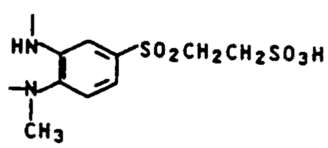 | H | $SO_3H$ | F |
| 49 | 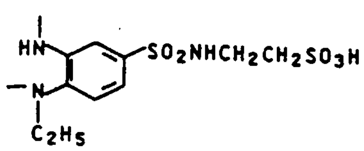 | $SO_3H$ | H | F |
| 50 | 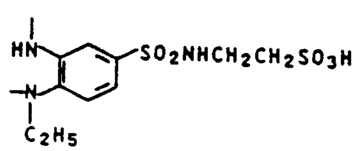 | H | $SO_3H$ | F |

| Beisp. Nr. | X | $R^3$ | $R^4$ | Q |
|---|---|---|---|---|
| 51 | 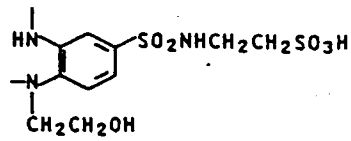 | $SO_3H$ | H | F |
| 52 | 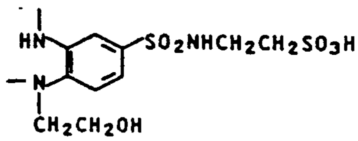 | H | $SO_3H$ | F |
| 53 | 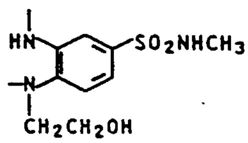 | $SO_3H$ | H | F |
| 54 | 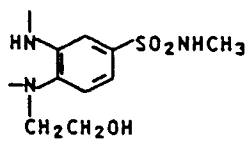 | H | $SO_3H$ | F |
| 55 | 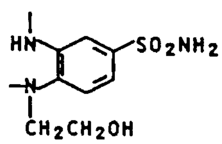 | $SO_3H$ | H | F |
| 56 | 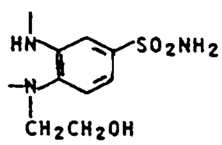 | H | $SO_3H$ | F |

## Patentansprüche

**1.** Verdoppelte Kupfer-Formazanreaktivfarbstoffe der Formel I

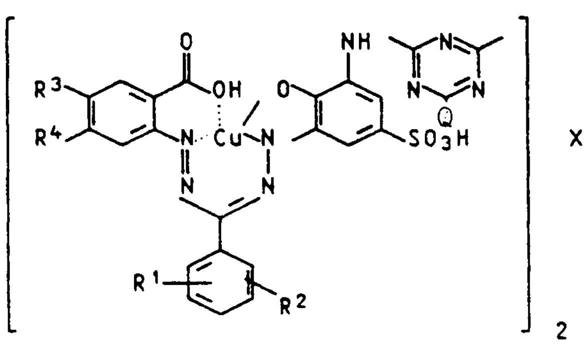

X (I)

in der
$R^1$ Wasserstoff, Hydroxysulfonyl oder Chlor,
$R^2$ Wasserstoff oder Hydroxysulfonyl,
einer der beiden Reste $R^3$ und $R^4$ Wasserstoff und der andere Hydroxysulfonyl,
Q Fluor oder Chlor und
X einen Rest der Formel

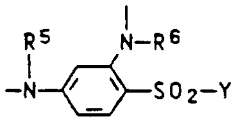 oder 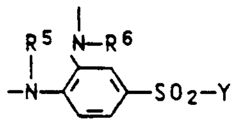

bedeuten, wobei $R^5$ und $R^6$ gleich oder verschieden sind und unabhängig voneinander jeweils für Wasserstoff oder gegebenenfalls durch Cyano oder Hydroxy substituiertes $C_1$-$C_4$-Alkyl und Y für Hydroxy oder den Rest $NR^7R^8$ stehen, in dem $R^7$ und $R^8$ gleich oder verschieden sind und unabhängig voneinander jeweils die Bedeutung von Wasserstoff oder von gegebenfalls durch Cyano, Hydroxy oder Hydroxysulfonyl substituiertem $C_1$-$C_4$-Alkyl besitzen, mit der Maßgabe, daß $R^5$ und $R^6$ nicht gleichzeitig Wasserstoff bedeuten,
und ihre Salze.

**2.** Verdoppelte Kupfer-Formazanreaktivfarbstoffe gemäß Anspruch 1, dadurch gekennzeichnet, daß $R^1$ und $R^2$ jeweils Wasserstoff und X einen Rest der Formel

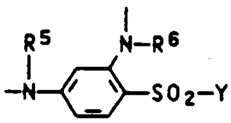 oder 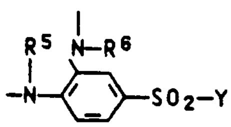

bedeuten, wobei $R^5$ und $R^6$ jeweils gleich oder verschieden sind und unabhängig voneinander für Wasserstoff, Methyl oder Ethyl stehen und Y die in Anspruch 1 genannte Bedeutung besitzt.

**3.** Verdoppelte Kupfer-Formazanreaktivfarbstoffe gemäß Anspruch 1, dadurch gekennzeichnet, daß $R^1$ und $R^2$ jeweils Wasserstoff und X einen Rest der Formel

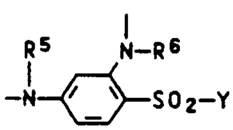

bedeuten, wobei $R^5$ und $R^6$ unabhängig voneinander für Wasserstoff, Methyl oder Ethyl und Y für Hydroxy stehen.

**4.** Verwendung der verdoppelten Kupfer-Formazanreaktivfarbstoffe gemäß Anspruch 1 zum Färben oder Bedrucken von Hydroxygruppen oder Stickstoff enthaltenden organischen Substraten.

## Claims

**1.** A doubled copper formazan reactive dye of the formula I

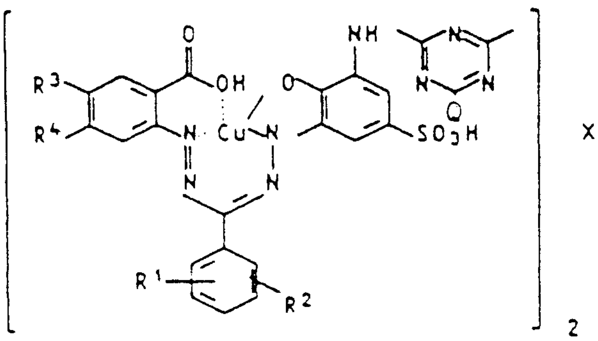 X (I)

where
$R^1$ is hydrogen, hydroxysulfonyl or chlorine,
$R^2$ is hydrogen or hydroxysulfonyl,
one of the two radicals $R^3$ and $R^4$ is hydrogen and the other hydroxysulfonyl,
Q is fluorine or chlorine and
X is a radical of the formula

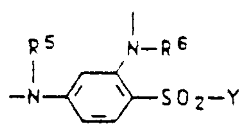 or 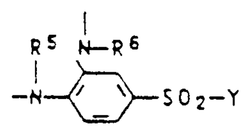

where $R^5$ and $R^6$ are identical or different and each is independently of the other hydrogen or unsubstituted or cyano- or hydroxyl-substituted $C_1$-$C_4$-alkyl and Y is hydroxyl or the radical $NR^7R^8$ where $R^7$ and $R^8$ are identical or different and each is independently of the other hydrogen or unsubstituted or cyano-, hydroxyl- or hydroxysulfonyl-substituted $C_1$-$C_4$-alkyl, with the proviso that $R^5$ and $R^6$ are not both hydrogen,
or a salt thereof.

**2.** A doubled copper formazan reactive dye as claimed in claim 1, wherein $R^1$ and $R^2$ are each hydrogen and X is a radical of the formula

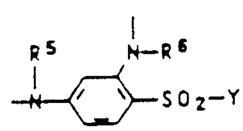 or 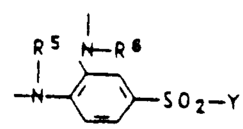

where in each case $R^5$ and $R^6$ are identical or different and each is independently of the other hydrogen, methyl or ethyl and Y is as defined in claim 1.

**3.** A doubled copper formazan reactive dye as claimed in claim 1, wherein $R^1$ and $R^2$ are each hydrogen and X is a radical of the formula

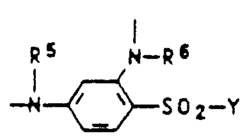

where $R^5$ and $R^6$ are each independently of the other hydrogen, methyl or ethyl and Y is hydroxyl.

**4.** Use of a doubled copper formazan reactive dye as claimed in claim 1 for dyeing or printing hydroxyl- or nitrogen-containing organic substrates.

## Revendications

**1.** Colorants réactifs formazane-cuivre doubles de formule I

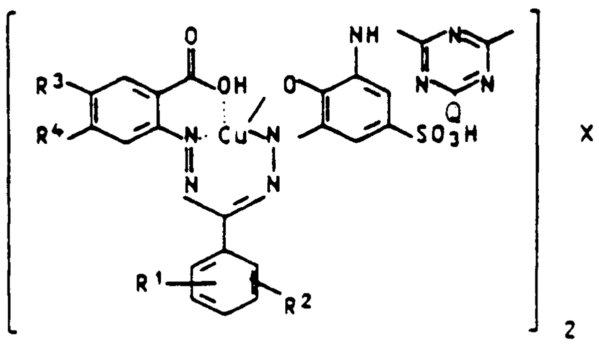

(I)

dans laquelle
$R^1$ est un atome d'hydrogène, un groupement hydroxysulfonyle ou un atome de chlore,
$R^2$ est un atome d'hydrogène ou un groupement hydroxysulfonyle,
l'un des deux restes $R^3$ et $R^4$ est un atome d'hydrogène et l'autre est un groupement hydroxysulfonyle,
Q est un atome de fluor ou de chlore et
X est un reste de formule

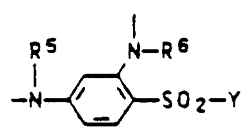

ou

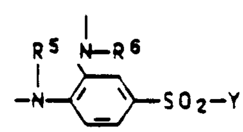

où $R^5$ et $R^6$ sont identiques ou différents et représentent indépendamment l'un de l'autre chacun un atone d'hydrogène ou un groupement alkyle en $C_1$-$C_4$ éventuellement substitué par un radical cyano ou hydroxy et Y représente un groupement hydroxy, ou le reste $NR^7R^8$ où $R^7$ et $R^8$ sont identiques ou différents et représentent indépendamment l'un de l'autre un atome d'hydrogène ou un groupement alkyle en $C_1$-$C_4$ éventuellement substitué par un radical cyano, hydroxy ou hydroxysulfonyle, pourvu que $R^5$ et $R^6$ ne représentent pas un atome d'hydrogène en même temps,
et leurs sels.

**2.** Colorants réactifs formazane-cuivre doubles selon la revendication 1, caractérisés en ce que $R^1$ et $R^2$ sont chacun un atome d'hydrogène et X est un reste de formule

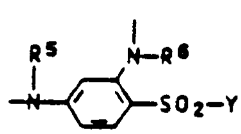

ou

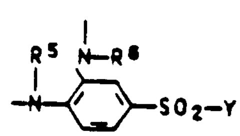

où $R^5$ et $R^6$ sont identiques ou différents et représentent indépendamment l'un de l'autre un atome d'hydrogène ou un groupement méthyle ou éthyle et Y a la signification donnée dans la revendication 1.

**3.** Colorants réactifs formazane-cuivre doubles selon la revendication 1, caractérisés en ce que $R^1$ et $R^2$ représentent un atome d'hydrogène et X un reste de formule

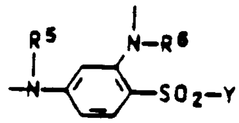

dans laquelle $R^5$ et $R^6$ représentent indépendamment l'un de l'autre un atome d'hydrogene ou un groupement méthyle ou éthyle et Y représente un groupement hydroxy.

**4.** Utilisation des colorants réactifs formazane-cuivre doubles selon la revendication 1 pour colorer ou imprimer des substrats organiques contenant des groupements hydroxy ou des atomes d'azote.